# EUROPÄISCHE PATENTSCHRIFT

(11) **EP 3 473 380 B1**
(45) Veröffentlichungstag und Bekanntmachung des Hinweises auf die Patenterteilung: **11.01.2023**
(21) Anmeldenummer: 18184356.6
(22) Anmeldetag: 19.07.2018
(51) Int. Cl.: B24B 23/04, H02K 7/075, B24B 47/16, B24B 27/08, B27B 19/00, B24B 47/00, B25F 5/00, B23D 51/16, H02K 7/00, B24B 49/00

(54) **OSZILLATIONSANTRIEB MIT VERSTELLBAREM OSZILLATIONSWINKEL**
OSCILLATION DRIVE WITH ADJUSTABLE OSCILLATION ANGLE
ENTRAÎNEMENT OSCILLANT À ANGLE D'OSCILLATION RÉGLABLE

(30) Priorität: 23.10.2017 DE 102017124745
(43) Veröffentlichungstag der Anmeldung: 24.04.2019
(73) Patentinhaber: C. & E. Fein GmbH, 73529 Schwäbisch Gmünd-Bargau (DE)
(72) Erfinder: Bek, Fabian, 73560 Böbingen (DE); Thomaschewski, Walter, 70794 Filderstadt (DE); Wohlfrom, Christoph, 73540 Heubach (DE)
(74) Vertreter: Wallinger, Michael

(56) Entgegenhaltungen:
- EP-A1- 2 760 612
- WO-A1-2015/078386
- DE-A1- 10 220 325
- DE-A1-102014 102 130
- GB-A- 2 420 518
- US-A1- 2012 007 748

## Beschreibung

Die Erfindung betrifft einen Oszillationsantrieb gemäß dem Oberbegriff des Anspruchs 1.

Aus der DE 102 20 325 ist beispielsweise ein Oszillationsantrieb mit einem Antrieb und mit einem Exzenterkoppeltrieb zur Umsetzung einer Drehbewegung des Antriebs in eine drehoszillierende Bewegung einer Werkzeugspindel um ihre Längsachse, wobei der Exzenterkoppeltrieb einen vom Antrieb angetriebenen Exzenter mit einer ersten Exzentrizität aufweist, der mit einem Koppelelement zusammenwirkt, das mit der Werkzeugspindel gekoppelt ist, um die Bewegung des Exzenters in eine drehoszillierende Bewegung der Werkzeugspindel umzusetzen bekannt.

Hierbei ist am Ende einer Motorwelle ein Exzenterzapfen aufgenommen. Auf dem Exzenterzapfen ist ein Exzenterlager in Form eines Nadellagers gehalten, das über einen balligen Außenring zwischen den beiden Gabelenden einer Schwinggabel gehalten ist. Die Schwinggabel ist an ihrem anderen Ende drehfest mit der Werkzeugspindel verbunden.

Mit einer derartigen Ausführung ergibt sich ein ziemlich einfacher Aufbau des Oszillationsantriebs. Derartige Oszillationsantriebe finden vielfältige Verwendung, etwa beim Schleifen, Sägen oder auch beim Schneiden von Werkstücken. Hierbei liegen übliche Oszillationsfrequenzen etwa im Bereich von 5.000 bis 25.000 Oszillationen pro Minute. Typische maximale Verschwenkwinkel der Werkzeugspindel (auch als Amplitude der Oszillation bezeichnet) betragen etwa zwischen 0,5° und 7° (von Totpunkt zu Totpunkt).

Solchermaßen gestaltete Oszillationsantriebe sind hochflexibel und für viele mögliche Anwendungen, Einsatzgebiete und zu verwendende Werkzeuge geeignet. Durch ihre kompakte und leichte Gestalt gestatten sie es dem Anwender, verschiedenste Griff- bzw. Arbeitspositionen in Bezug auf das Handwerkzeug bzw. das Werkstück einzunehmen.

Wegen der Vielfältigkeit der verwendbaren Werkzeuge ist der Oszillationswinkel, der von einem bestimmten Oszillationsantrieb erzeugt wird, immer mit einem gewissen Kompromiss verbunden. Während zum Beispiel Oszillationswerkzeuge, die zum Flächenschleifen verwendet werden und somit einen relativ großen dreieckförmigem oder runden Schleifteller aufweisen, vorteilhafterweise mit einem relativ kleinen Oszillationswinkel angetrieben werden sollten, um eine Überlastung des Antriebs zu vermeiden, gibt es andere Werkzeuge, die vorteilhaft mit einem größeren Oszillationswinkel angetrieben werden sollten, etwa um einen schnellen Arbeitsfortschritt zu ermöglichen. Dies kommt insbesondere bei kleineren Werkzeugen in Frage, welche keine große Trägheit besitzen. Dagegen sind für andere Arbeiten, beispielsweise zum Durchtrennen des Klebewulstes von Autoscheiben beim Ausglasen geringe Oszillationswinkel bevorzugt, um eine Selbstzerstörung der betreffenden Schneidemesser zu vermeiden.

Aus der DE 102014102130 A1 ist ebenfalls ein Oszillationsantrieb bekannt, bei dem die Werkzeugspindel um ihre Längsachse schwenkbar gelagert ist. Der Antrieb erfolgt hierbei hydraulisch mittels eines Drehflügelmotors. Bei diesem hydraulischen Oszillationsantrieb ist der Oszillationsbewegung der Werkzeugspindel verstellbar. Hierzu werden zwei Exzenter überlagert, deren relative Lage zueinander aufwändig gesichert werden muss.

Aus der GB 2 420 518 A ist eine Handwerkzeugmaschine bekannt, bei der sich zwei Exzenter überlagern, um eine resultierende Exzentrizität zu erreichen. Für die Verstellung der beiden Exzenter müssen bei der GB 2 420 518 A die beiden Exzenter aufwändig gegeneinander verstellt werden.

Vor diesem Hintergrund liegt der Erfindung die Aufgabe zugrunde, einen Oszillationsantrieb bereitzustellen, der eine vereinfachte Veränderung des maximalen Oszillationswinkels, d.h. der Amplitude zwischen zwei Totpunkten, ermöglicht.

Diese Aufgabe wird bei einem Oszillationsantrieb gemäß der eingangs genannten Art erfindungsgemäß durch die Merkmale des kennzeichnenden Teils des Anspruchs 1 gelöst.

Die Aufgabe der Erfindung wird auf diese Weise gelöst.

Da sich die Wirkungen von Exzenter und Zusatzexzenter überlagern, ergibt sich eine resultierende Bewegung, die zwischen Extremen variiert werden kann, nämlich zwischen einer additiven Überlagerung, bei welcher sich die beiden Exzentrizitäten addieren, und zwischen einer Stellung, in der sich eine minimale Amplitude ergibt, da sich die beiden Exzentrizitäten substraktiv überlagern.

Grundsätzlich ist es denkbar, die Relativposition zwischen Exzenter und Zusatzexzenter kontinuierlich verstellbar auszugestalten. Auf diese Weise ergibt sich eine Amplitude der Oszillationsbewegung, die in vorgegebenen Grenzen stufenlos veränderbar ist.

Gemäß einer bevorzugten Weiterbildung der Erfindung ist der Antrieb in seiner Drehrichtung umschaltbar ausgebildet, um eine Umschaltung zwischen einer ersten Relativposition von Exzenter und Zusatzexzenter, in welcher sich die beiden Exzentrizitäten additiv überlagern, und einer zweiten Relativposition, in welcher sich die Exzentrizitäten von Exzenter und Zusatzexzenter substraktiv überlagern, zu bewirken.

Auf diese Weise ergibt sich eine besonders einfache Konstruktion. Durch einfache Umschaltung der Drehrichtung des Antriebs können zwei unterschiedliche Amplituden der Oszillationsbewegung eingestellt werden. Je nach Auslegung von Exzenter und Zusatzexzenter können auf diese Weise unterschiedliche Paarungen von Oszillationswinkeln erzielt werden.

Eine bevorzugte Ausgestaltung ist beispielsweise eine Kombination einer Amplitude von 2,6° bei subtraktiver Überlagerung und einer Amplitude von 5,0° bei additiver Überlagerung. Es sind aber grundsätzlich auch beliebige andere Amplitudenpaarungen in gewissen Grenzen denkbar. Kleine Amplituden sind von Vorteil für ein genaues Arbeiten, sowie für Schneidmesser oder sehr lange bzw. große Werkzeuge. Große Amplitude dagegen sorgen für einen großen Arbeitsfortschritt und führen zu einem ungenaueren Arbeiten. Manche Werkzeuge und auch manche Oszillationsantriebe, die beim Arbeiten zu sehr großen Beschleunigungskräften führen, wie etwa sehr große Schleifplatten oder lange Messer, sind nur für kleinere Amplituden geeignet.

Vorzugsweise sind der Exzenter und der Zusatzexzenter zwischen der ersten und zweiten Relativposition um 180° zueinander verdreht.

Auf diese Weise kann einfach durch die Drehrichtungsumkehr die maximale Differenz zwischen der additiven Überlagerung der Exzentrizitäten und der substraktiven Überlagerung der Exzentrizitäten erreicht werden.

Erfindungsgemäß ist das Koppelelement als Schwinggabel ausgebildet, welche an einem ersten Ende fest mit der Werkzeugspindel verbunden ist und an einem zweiten Ende vom Zusatzexzenter angetrieben ist.

Dies ermöglicht eine besonders einfache Konstruktion.

Gemäß einer weiteren Ausgestaltung der Erfindung ist der Zusatzexzenter auf dem Exzenter drehbar aufgenommen und das zweite Ende der Schwinggabel umschließt ein Exzenterlager, das auf dem Zusatzexzenter gehalten ist, von außen.

Vorzugsweise ist das Exzenterlager als Drehlager mit einem balligen Außenring ausgebildet, der von zwei Gabelenden der Schwinggabel umschlossen ist.

Auf diese Weise ergibt sich eine besonders einfache, zuverlässige Konstruktion.

Der Exzenter weist bevorzugt einen Exzenterstutzen auf, der in eine exzentrisch angeordnete Ausnehmung des Zusatzexzenters eingreift, auf dessen Außenoberfläche das Exzenterlager gehalten ist.

Weiter bevorzugt ist der Exzenterstutzen an einem Ende eines rotatorisch angetriebenen Abtriebs ausgebildet.

Der Antrieb weist hierbei vorzugsweise einen Elektromotor auf, an dessen Motorwelle der Exzenterstutzen ausgebildet ist.

Durch diese Merkmale ist eine besonders einfache und zuverlässige Konstruktion gewährleistet.

Gemäß einer weiteren Ausgestaltung der Erfindung ist auf der Motorwelle eine Hülse drehfest angeordnet, die über einen Mitnehmer in mindestens zwei Relativpositionen mit dem Zusatzexzenter koppelbar ist.

Auf diese Weise kann die Relativposition zwischen Zusatzexzenter und Exzenter, der unmittelbar an der Motorwelle aufgenommen ist, sehr einfach verstellt werden.

Gemäß einer weiteren Ausführung der Erfindung weist der Zusatzexzenter eine Scheibe auf, die innerhalb der Hülse verdrehbar angeordnet ist und in den mindestens zwei Relativpositionen an einer Nase der Hülse anschlägt.

Auf diese Weise gestaltet sich die Umschaltung zwischen den beiden Relativpositionen durch Drehrichtungsumkehr der Motorwelle besonders einfach.

Gemäß einer weiteren Ausgestaltung der Erfindung weist die Scheibe einen federnden Abschnitt auf, der sich unter Fliehkraftwirkung nach außen aufweitet und an einer Innenoberfläche der Hülse zur Fixierung der Relativlage zwischen Exzenter und Zusatzexzenter anliegt.

Durch die Aufweitung des federnden Abschnitts unter Fliehkraftwirkung ist gewährleistet, dass sich die Relativlage zwischen Exzenter und Zusatzexzenter und somit die Amplitude der Oszillation im Betrieb nicht mehr verändern kann.

Die zuvor beschriebene Ausführung erlaubt eine besonders einfache Umschaltung zwischen den beiden Amplituden der Oszillation durch Drehrichtungsumkehr der Motorwelle. Der Zusatzexzenter bleibt bei Drehrichtungsumkehr der Motorwelle zunächst stehen und wird dann durch die weitere Drehung der Motorwelle mitgenommen, sobald die Scheibe des Zusatzexzenters an der Nase der Hülse anschlägt. Das Stehenbleiben des Zusatzexzenters erfolgt rein durch Trägheit.

Das Stehenbleiben des Zusatzexzenters durch Trägheit beim Umschalten der Drehrichtung kann in ungünstigen Fällen, etwa durch unterschiedliche Fettfüllungen, gegebenenfalls zu undefinierten Zuständen führen. Es kann sich so unter ungünstigen Umständen eine Veränderung der Amplitude des Oszillationswinkels ergeben, die von der gewünschten Veränderung abweicht.

Um derartige Probleme zu vermeiden, kann zusätzlich der Zusatzexzenter mittels einer Bremseinrichtung angehalten werden, bevor bei der Umschaltung der Drehrichtung wieder eine Mitnahme erfolgt.

Hierzu ist eine Bremseinrichtung vorgesehen, welche eine Bremsung des Zusatzexzenters im Stillstand relativ zum Gehäuse erlaubt und die sich bei rotierender Motorwelle unter Fliehkraftwirkung löst, um die Bremswirkung aufzuheben.

Auf diese Weise ist in jedem Fall gewährleistet, dass der Zusatzexzenter zunächst stehen bleibt und erst, nachdem sich der Exzenter um 180° relativ dazu bewegt, hat, mitgenommen wird. Auf diese Weise ist eine Umschaltung der Relativposition zwischen Exzenter und Zusatzexzenter jeweils um die gewünschte Verdrehung von 180° zueinander in jedem Falle gewährleistet, so dass sich die Umschaltung zwischen der additiven Überlagerung der Exzentrizitäten und der subtraktiven Überlagerung der Exzentrizitäten präzise ergibt.

Gemäß einer weiteren Ausgestaltung der Erfindung weist die Hülse eine Führungskulisse in Form einer Ausnehmung auf, durch welche hindurch ein Mitnehmerstift in eine zugeordnete Mitnehmeraufnahme am Zusatzexzenter eingreift, um die Relativposition zwischen Exzenter und Zusatzexzenter festzulegen.

Auf diese Weise wird die Mitnahme zwischen Exzenter und Zusatzexzenter auf einfache Weise ermöglicht.

In weiterer Ausgestaltung der Erfindung weist die Bremseinrichtung zwei federnd beaufschlagte, radial bewegliche Bremsbacken zur Bremsung des Zusatzexzenters bei Drehrichtungsumkehr am Gehäuse auf, welche sich unter Fliehkraftwirkung nach außen gegen die Federwirkung aufweiten, um die Bremsung aufzuheben.

Auf diese Weise ist gewährleistet, dass der Zusatzexzenter bei Drehrichtungsumkehr zunächst abgebremst wird und dass die Bremsung bei zunehmender Drehzahl wieder aufgehoben wird.

Bevorzugt ist hierbei am Gehäuse eine Lagerbuchse gehalten, auf der die Bremsbacken bei Drehrichtungsumkehr aufliegen, und wobei sich die Bremsbacken unter Fliehkraftwirkung an einer Innenoberfläche der Hülse anlegen, um so die Relativlage zwischen Exzenter und Zusatzexzenter zu fixieren.

Auf diese Weise ist gewährleistet, dass die Bremsbacken im Betrieb die Relativlage zwischen Exzenter und Zusatzexzenter sicher fixieren, so dass sich die Amplitude des Oszillationswinkels nicht verändern kann.

Gemäß einer weiteren Ausgestaltung der Erfindung sind die Bremsbacken über den Mitnehmerstift, der sich durch die Führungskulisse der Hülse hindurch in die Mitnehmeraufnahme erstreckt, mit dem Zusatzexzenter gekoppelt.

Auf diese Weise wird einerseits die Mitnahme des Zusatzexzenters bewirkt und andererseits werden gleichzeitig die Bremsbacken mit dem Zusatzexzenter gekoppelt.

Durch die Erfindung wird ferner ein System mit einem Oszillationsantrieb gemäß der vorstehend beschriebenen Art bereitgestellt, mit einer Mehrzahl von Werkzeugen, wobei die Werkzeuge eine Codierung aufweisen, und wobei eine Steuerung zur automatischen Einstellung des Oszillationswinkels vorgesehen ist.

Auf diese Weise kann bei einer Verwendung des Oszillationsantriebs mit einer Mehrzahl von Werkzeugen eine automatische Einstellung des Oszillationswinkels in Abhängigkeit vom verwendeten Werkzeug festgelegt werden. Hierdurch wird erreicht, dass das betreffende Werkzeug immer mit der gewünschten Amplitude des Oszillationswinkels betrieben wird, um so einen optimierten Einsatz zu gewährleisten.

Die Steuerung kann ferner zur automatischen Einstellung des Oszillationswinkels und/oder der Drehzahl ausgebildet sein.

Somit können die betreffenden Werkzeuge automatisch mit dem optimalen Oszillationswinkel und der zugeordneten optimalen Drehzahl betrieben werden.

Die Codierung ist hierbei bevorzugt als RFID-Chip ausgebildet.

Der Antrieb weist vorzugsweise einen elektronisch kommutierten Elektromotor auf. Hierbei kann die Umschaltung der Drehrichtung automatisch durch die Steuerung erfolgen. Auch lässt sich die Drehzahl automatisch einstellen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Darstellung eines erfindungsgemäßen Oszillationsantriebs;
- Fig. 2: einen Längsschritt durch den Oszillationsantrieb gemäß Fig. 1;
- Fig. 3: eine Explosionsansicht der wesentlichen Teile des Antriebsstrangs, die miteinander in Einbaurichtung entlang einer Längsachse dargestellt sind;
- Fig. 4: einen Längsschritt durch die Motorwelle und zugeordnete Teile im Bereich der Lagerung mit Zusatzexzenter und Exzenterlager in einer ersten Relativposition zwischen Exzenter und Zusatzexzenter, in der sich die beiden Exzentrizitäten additiv überlagern;
- Fig. 5: eine Darstellung gemäß Fig. 4, wobei jedoch Exzenter und Zusatzexzenter in eine um 180° zueinander verdrehte Position bewegt sind, in der sich die beiden Exzentrizitäten subtraktiv überlagern;
- Fig. 6: eine vergrößerte perspektivische Darstellung der Motorwelle im Bereich der Bremseinrichtung, wobei zum Zwecke der besseren Erkennbarkeit eine Reihe von Teilen freigeschnitten wurden;
- Fig. 7: eine Darstellung gemäß Fig. 6, wobei jedoch ein durch die Mittelachse der Motorwelle verlaufender Längsschnitt vorgesehen wurde;
- Fig. 8: eine abgewandelte Ausführung des Oszillationsantriebs gemäß der Fig. 4 und 5 mit einem Längsschnitt durch den vorderen Teil der Motorwelle, mit zugeordneter Lagerung, Exzenter, Zusatzexzenter und Exzenterlager in einer ersten Relativposition zwischen Exzenter und Zusatzexzenter, in der sich eine additive Überlagerung der beiden Exzentrizitäten ergibt;
- Fig. 9: eine Darstellung gemäß Fig. 8, wobei Exzenter und Zusatzexzenter jedoch um 180° zueinander verdreht wurden, so dass sich eine substraktive Überlagerung der beiden Exzentrizitäten ergibt;
- Fig. 10: eine vergrößerte perspektivische Darstellung der Ausführung gemäß der Fig. 8 und 9, wobei die Motorwelle nebst dem darauf angeordneten Rotorkörper, die Hülse zwischen Exzenter und Zusatzexzenter, sowie das Exzenterlager erkennbar sind;
- Fig. 11: eine Vorderansicht der Anordnung gemäß Fig. 10 nach Abnahme des Exzenterlagers und
- Fig. 12: ein System mit einem Oszillationsantrieb gemäß Fig. 1 und mit zwei zugehörigen Werkzeugen.

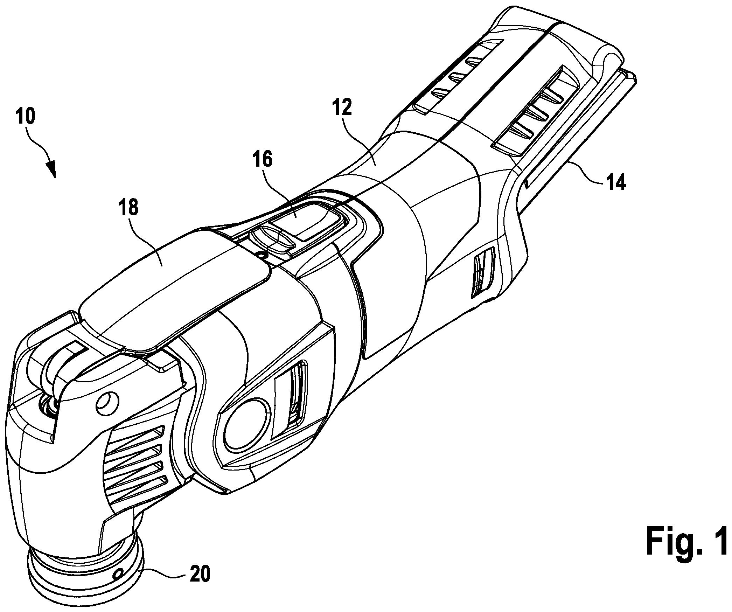

In Fig. 1 ist ein erfindungsgemäßer Oszillationsantrieb perspektivisch dargestellt und insgesamt mit der Ziffer 10 bezeichnet. Der Oszillationsantrieb 10 weist ein Gehäuse 12 auf, das mit einer Hand umgreifbar ist und an dessen hinterem Ende eine Aufnahme 14 für einen Akkumulator vorgesehen ist. Aus einem vorderen Ende des Gehäuses 12 steht eine Werkzeugspindel 20 rechtwinklig nach unten hervor. An der Werkzeugspindel 20 können verschiedene Werkzeuge mittels einer Schnellspanneinrichtung befestigt werden, wozu ein Spannhebel 18 vorgesehen ist, der an der Oberseite des Gehäuses 12 erkennbar ist. An der Oberseite des Gehäuses 12 ist ferner ein Ein-Aus-Schalter 16 erkennbar, der zum Ein- und Ausschalten der Maschine dient. Ferner ist ein Schalter zur Drehrichtungsumkehr vorgesehen, der auf der rechten Seite des Gehäuses 12 angeordnet ist (nicht dargestellt).

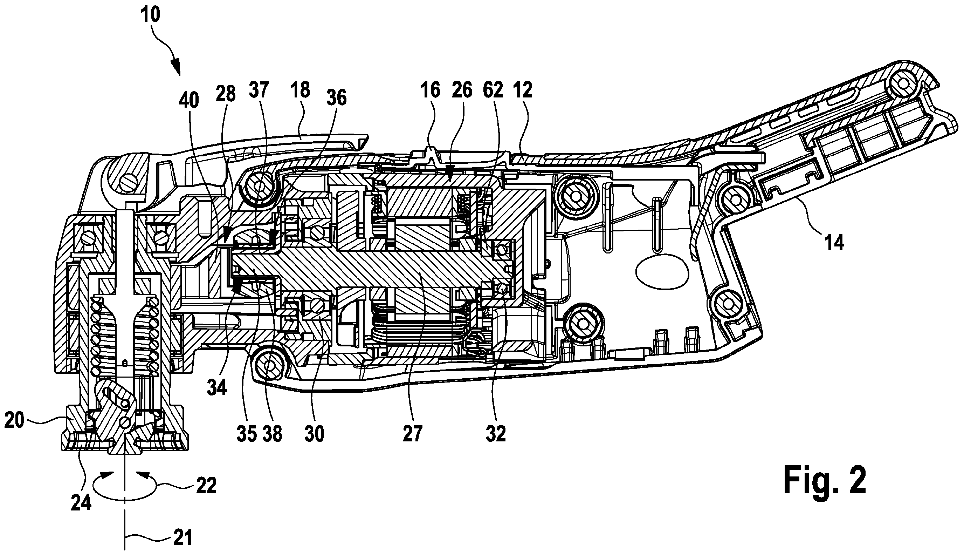

Fig. 2 zeigt einen Längsschnitt durch den Oszillationsantrieb 10 gemäß Fig. 1.

Der Oszillationsantrieb 10 weist einen Antrieb 26 auf, der im vorliegenden Fall als elektronisch kommutierbarer Elektromotor (EC-Motor) ausgebildet ist. Dieser weist eine Motorwelle 27 auf, die mittels zweier Lager 30, 32 drehbar gelagert ist. Die Drehbewegung der Motorwelle 27 wird über einen Exzenterkoppeltrieb in eine drehoszillierende Bewegung der Werkzeugspindel 20 um ihre Längsachse 21 umgesetzt, wie durch den Doppelpfeil 22 angedeutet ist. Während bei herkömmlichen Exzenterkoppeltrieben eine exzentrische Bewegung eines am Ende der Motorwelle vorgesehenen Exzenters mittels eines balligen Exzenterlagers und eines Schwinghebels, der am Exzenterlager angreift und der fest mit der Werkzeugspindel gekoppelt ist, aufweist, ist erfindungsgemäß zusätzlich ein weiterer Exzenter, der sogenannte Zusatzexzenter vorgesehen, wodurch die Amplitude der Oszillationsbewegung veränderbar wird.

Zusätzlich zu einem Exzenter 34 mit einem Exzenterstutzen 35 am Ende der Motorwelle 27 ist also ein Zusatzexzenter 36 vorgesehen, der mit einer Ausnehmung 37 unmittelbar auf dem Exzenterstutzen 35 gehalten ist. Die Ausnehmung 37 ist exzentrisch angeordnet, so dass sich an der Außenoberfläche des Zusatzexzenters 36 eine Exzenterbewegung ergibt, die aus der Überlagerung der beiden Exzentrizitäten von Exzenter 34 und von Zusatzexzenter 36 resultiert. Auf der Außenoberfläche des Zusatzexzenters 36 ist ein Exzenterlager 38 mit einem balligen Außenring gehalten, das von einer Schwinggabel 40 beidseitig umgriffen wird, deren anderes Ende fest mit der Werkzeugspindel 20 verbunden ist. Die Exzenterbewegung des Exzenterlagers 38 wird somit in eine oszillierende Bewegung der Werkzeugspindel 20 umgesetzt.

Mit welcher Exzentrizität das Exzenterlager 38 und somit der Schwinghebel 40 bewegt wird, hängt von der Relativlage zwischen dem Exzenter 34 und dem Zusatzexzenter 36 ab. In der in Fig. 2 gezeigten Stellung addieren sich die Exzentrizitäten von Exzenter 34 und Zusatzexzenter 36, so dass sich eine maximale Amplitude der Oszillationsbewegung ergibt. Wäre dagegen der Zusatzexzenter 34 um 180° gegenüber der Position in Fig. 2 verdreht, so würde sich eine subtraktive Überlagerung der beiden Exzentrizitäten ergeben, so dass sich durch die Exzenterbewegung eine minimale Auslenkung und damit eine minimale Amplitude der Oszillationsbewegung ergeben würde.

Erfindungsgemäß erfolgt die Umschaltung zwischen diesen beiden Relativpositionen, die um 180° zueinander verdreht sind, durch eine Drehrichtungsumkehr des Antriebs 26. Der Zusatzexzenter 36 bleibt beim Anlaufen stehen, bis er über einen zugeordneten Anschlag vom Exzenter 34 mitgenommen wird. Wird die Drehrichtung umgekehrt, so bleibt der Zusatzexzenter 36 wiederum zunächst stehen, bevor er in einer um 180° verdrehten Position über einen Anschlag des Exzenters 34 mitgenommen wird.

Das Stehenbleiben des Zusatzexzenters 36 kann einfach durch Trägheit erfolgen oder aber durch eine Bremseinrichtung erzwungen werden.

Im Folgenden werden beide Ausführungsvarianten näher erläutert.

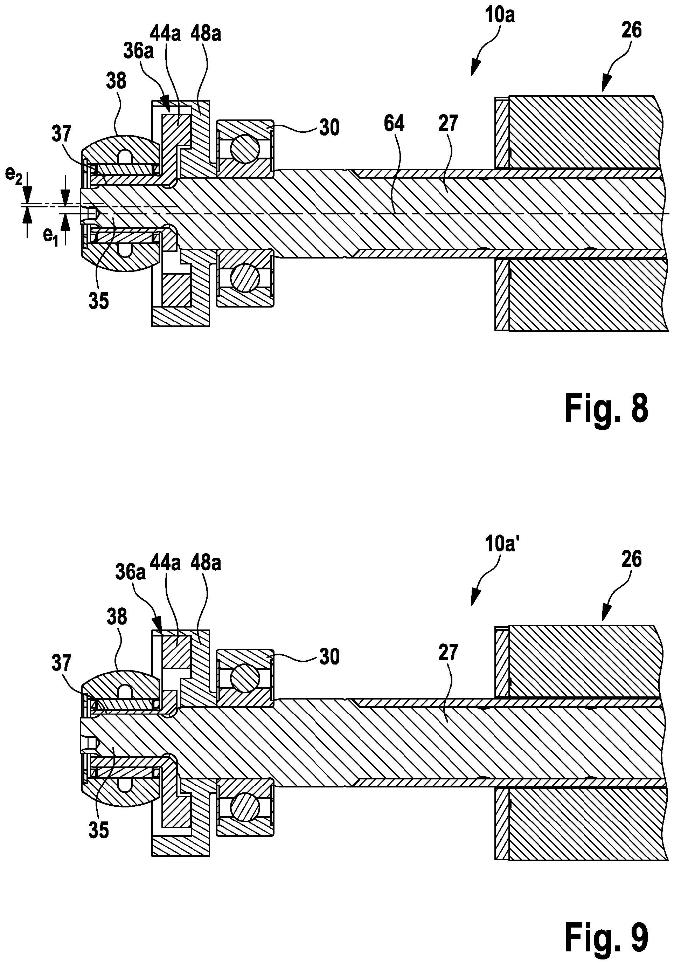

Die Fig. 2 bis 7 zeigen die Ausführung mit einer Bremseinrichtung, während die Fig. 8 bis 11 eine Ausführung ohne eine solche Bremseinrichtung zeigen, bei der das Stehenbleiben des Zusatzexzenters bei Drehrichtungsumkehr lediglich durch Trägheit erfolgt.

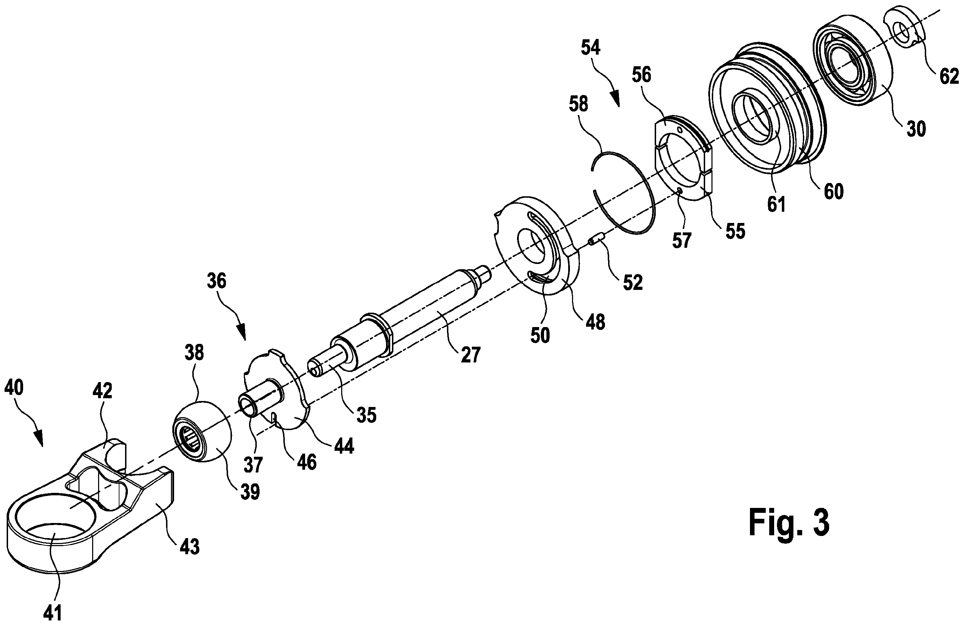

In Fig. 3 sind die wesentlichen beweglichen Teile der Ausführung mit Bremseinrichtung in einer Explosionsdarstellung hintereinander in Einbaulage dargestellt. Am linken Ende ist der Schwinghebel 40 dargestellt, der das Exzenterlager 38 an seinem balligen Außenring 39 mit zwei Gabelenden 42, 43 umschließt. Der Schwinghebel 40 ist mit einer Ausnehmung 41 drehfest auf der Werkzeugspindel 20 festgelegt, zum Beispiel durch Aufschrumpfen.

Auf der Motorwelle 27 ist am äußeren Ende der Exzenterstutzen 35 ausgebildet. Der Zusatzexzenter 36 ist hülsenförmig ausgebildet und weist eine exzentrische Ausnehmung 37 auf, mit der der Zusatzexzenter 36 auf dem Exzenterstift 35 drehbar gehalten ist. Motorseitig ist am Zusatzexzenter 36 eine Scheibe 44 angeformt, in der eine Mitnehmeraufnahme 46 in Form einer radial verlaufenden Nut 46 vorgesehen ist.

An die Scheibe 44 des Zusatzexzenters 37 schließt sich eine Hülse 48 an, in der eine Führungskulisse 50 in Form einer Nut vorgesehen ist, die sich über einen Winkelbereich von 180° erstreckt. Auf der rückwärtigen Seite der Hülse 50 ist eine insgesamt mit 54 bezeichnete Bremseinrichtung 54 vorgesehen, die zwei radial zueinander bewegliche Bremsbacken 55, 56 aufweist, die mittels eines außen umschließenden Federrings 58 nach innen hin federnd beaufschlagt sind. Einer der Bremsbacken 56, 57, in der Darstellung gemäß Fig. 3 der untere Bremsbacken 57, ist über einen Mitnehmerstift 52, der sich durch die Führungskulisse 50 hindurch erstreckt, drehmäßig mit dem Zusatzexzenter 36 gekoppelt, da der Mitnehmerstift 52 in die Mitnehmeraufnahme 46 der Scheibe 44 eingreift.

Das der Werkzeugspindel 20 zugewandte Lager 30, das mit seinem Innenring auf der Motorwelle 27 sitzt, greift mit seinem Außenring in eine Lagerbuchse 60, die im Gehäuse 12 festgelegt ist. Die Lagerbuchse 60 weist einen in Richtung zur Werkzeugspindel 20 vorstehenden Vorsprung 61 auf, auf dem die Bremsbacken 55, 56 mit ihrer Innenoberfläche aufliegen können, wenn diese durch den Federring 58 angepresst werden.

In Fig. 3 ist ferner noch ein zugeordnetes Ausgleichsgewicht 32 erkennbar, das am äußeren Ende der Motorspindel 27 vorgesehen ist (vgl. auch Fig. 2).

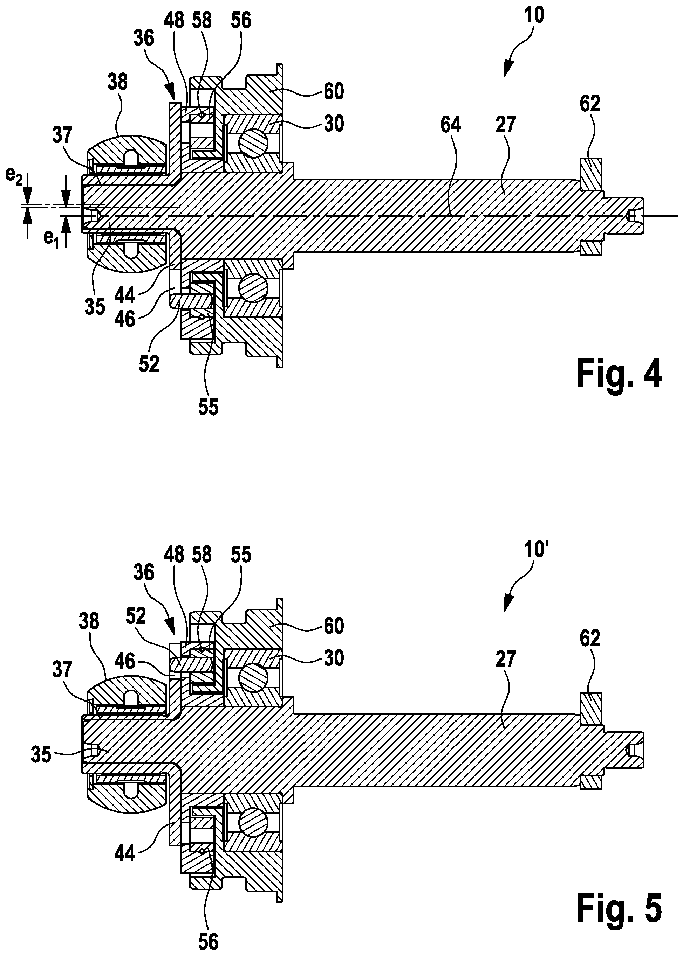

In Fig. 4 sind die beiden Exzentrizitäten, die sich durch den Exzenter 34 bzw. den Exzenterstift 35 und durch den Zusatzexzenter 36 ergeben, durch e1 und e2 angedeutet. Während der Exzenterstift 35 eine größere Exzentrizität e1 besitzt, ist die durch den Zusatzexzenter 36 bewirkte Exzentrizität e2 kleiner als die erste Exzentrizität e1.

In der dargestellten Position gemäß Fig. 4 ist die Relativlage von Exzenterstutzen 35 und Zusatzexzenter 36 derart, dass sich die beiden Exzentrizitäten e1 und e2 additiv überlagern, so dass die resultierende Gesamtexzentrizität eg = e1 + e2 ist. Werden Exzenter und Zusatzexzenter gegenüber der Position gemäß Fig. 4 um 180° zueinander verdreht, so ergibt sich die Position gemäß Fig. 5, in der sich die beiden Exzentrizitäten e1 und e2 subtraktiv überlagern, so dass die resultierende Gesamtexzentrizität eg = e1 - e2 ist.

Je nach Größe der Exzentrizitäten e1 und e2 ergeben sich unterschiedliche resultierende Exzentrizitäten, so dass die Amplitude des Oszillationswinkels in relativ weiten Grenzen anpassbar ist. Beispielsweise kann eine Kombination von 2,6°/5,0° (Amplitude des Oszillationswinkels von Totpunkt zu Totpunkt) verwendet werden.

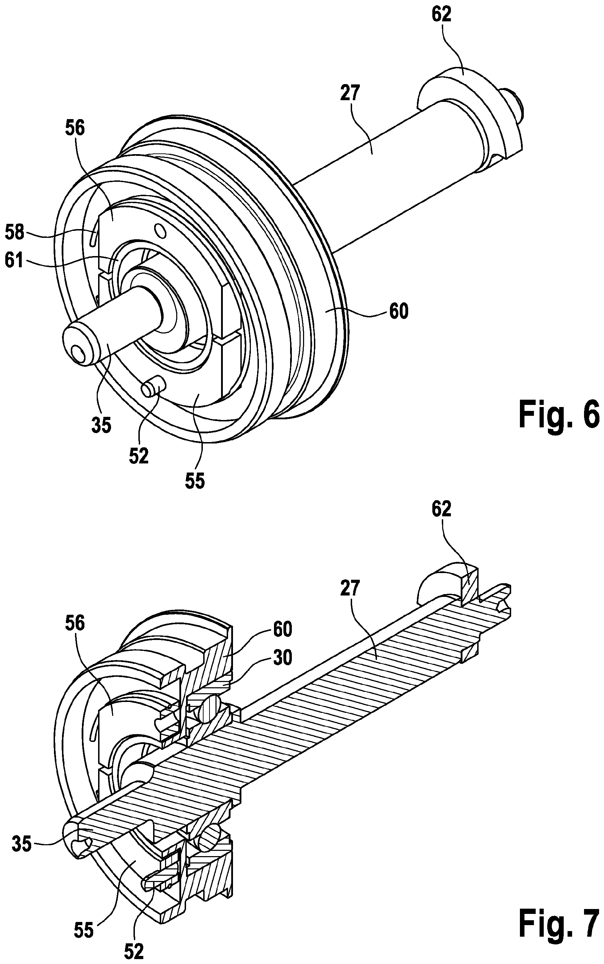

Wie aus den Fig. 6 und 7 näher zu ersehen, sind die beiden Bremsbacken 55, 56 beim Stillstand oder bei Drehrichtungsumkehr durch den umliegenden Federring 58 auf dem Vorsprung 61 der Lagerbuchse 60 gehalten. Während der Drehrichtungsumkehr wird somit der Zusatzexzenter 36 über den Mitnahmestift 52, der in die Mitnehmeraufnahme 46 eingreift, drehmäßig festgehalten bzw. abgebremst. Die Hülse 48 sitzt drehfest auf der Außenoberfläche der Motorwelle 27. Bewegt sich die Motorwelle 27 bei Drehrichtungsumkehr nunmehr in die umgekehrte Drehrichtung, so bewegt sich der Exzenterstutzen 35, der mit der Motorwelle 27 fest verbunden ist, solange relativ zum Zusatzexzenter 36, bis der Mitnahmestift 52 am anderen Ende der Führungskulisse 50 anschlägt und der Zusatzexzenter 36 nunmehr mitgenommen wird. Bei zunehmender Drehzahl bewegen sich die Bremsbacken 55, 56 nach außen, bis sie an einer Innenoberfläche der Hülse 48 zur Anlage kommen, so dass einerseits die Bremsung freigegeben wird und andererseits die Relativlage zwischen Exzenter 34 und Zusatzexzenter 36 fixiert ist.

Bei einer Drehrichtungsumkehr wird zunächst die Motorwelle 27 angehalten, so dass der Zusatzexzenter 36 mittels der Bremseinrichtung 24 wieder abgebremst wird, bis schließlich der Mitnahmestift 52 am entgegengesetzte Ende der Führungskulisse 50 zur Anlage kommt und den Zusatzexzenter 36 wieder mitnimmt.

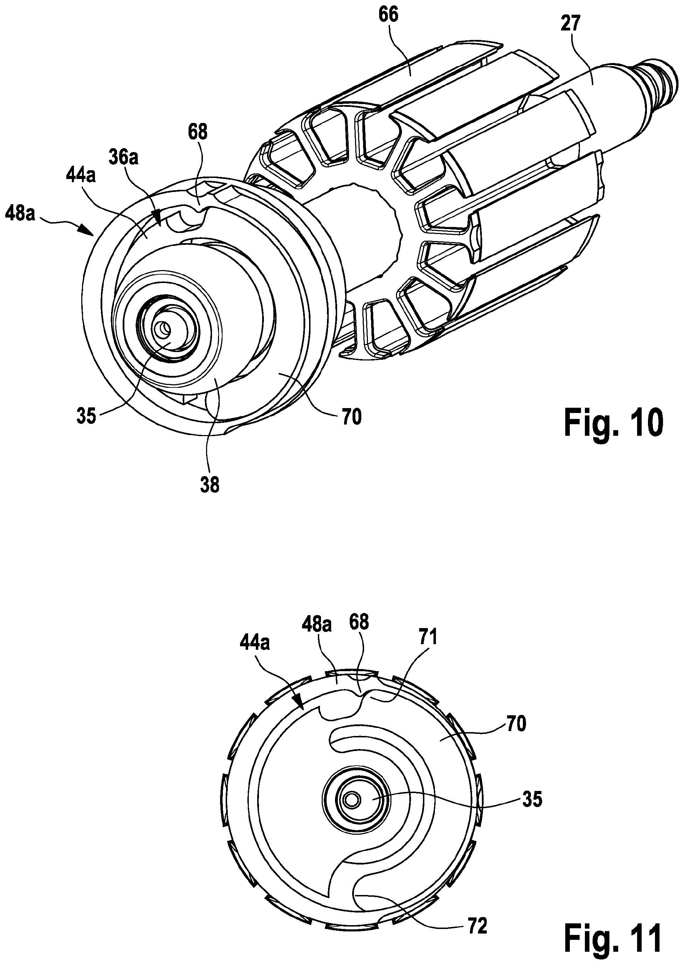

Die Fig. 8 bis 11 zeigen eine vereinfachte Ausführung des Oszillationsantriebs ohne Bremseinrichtung, der insgesamt mit 10a bezeichnet ist. Entsprechend abgewandelte Teile sind mit entsprechenden Bezugszeichen gekennzeichnet, die vom Buchstaben "a" gefolgt sind, während die übrigen entsprechenden Teile mit entsprechenden Bezugsziffern gekennzeichnet sind (in Fig. 10 und 11 ist zusätzlich noch der Rotorkörper 66 des Motors erkennbar).

Der hülsenförmige Zusatzexzenter 36a weist eine Scheibe 44a (vgl. insbesondere Fig. 8, 9, 11), von der eine Hälfte als ein federnder Abschnitt 70 ausgebildet ist. Die Scheibe 44a ist innerhalb der umschließenden Hülse 48a beweglich und weist am federnden Abschnitt 70 zwei Enden 71, 72 auf, die sich je nach Drehrichtung entweder an der einen Seite oder an der anderen Seite einer hervorstehenden Nase 68 der Hülse 48a anlegen können. Je nachdem ob der Zusatzexzenter 36a und damit die Scheibe 44a im Uhrzeigersinn oder im Gegenuhrzeigersinn gedreht wird, legt sich also das eine Ende 71 oder das andere Ende 72 des federnden Abschnitts 70 an der Nase 68 an, so dass sich eine Mitnahme ergibt. Bei zunehmender Drehzahl weitet sich der federnde Abschnitt 70 nach außen auf und legt sich an der zugeordneten Innenoberfläche der Hülse 48a an, so dass die Relativlage zwischen Exzenter 34 und Zusatzexzenter 36a und damit die Amplitude der Oszillationsbewegung fixiert ist.

Wie eingangs bereits erwähnt, sind für unterschiedliche Werkzeuge unterschiedliche Amplituden der Oszillationsbewegung besonders vorteilhaft. Es bietet sich somit an, die betreffenden Werkzeuge mit einer geeigneten Codierung zu versehen, die automatisch ausgelesen werden kann, um eine automatische Umschaltung der Amplitude des Oszillationswinkels zu bewirken.

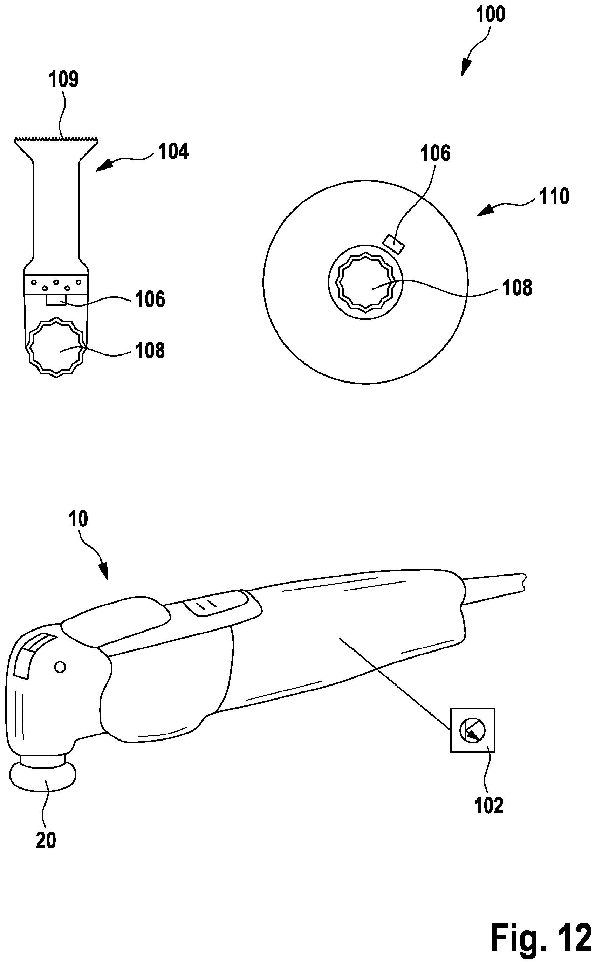

Fig. 12 zeigt beispielhaft ein System 100 mit einem Oszillationsantrieb 10 der vorstehend beschriebenen Art und mit zwei beispielhaft dargestellten Werkzeugen 104 und 110.

Das Werkzeug 104 ist ein längliches Sägewerkzeug mit einer Schneide 109 am äußeren Ende. Zur Befestigung ist eine Befestigungsöffnung 108 vorgesehen, mit der eine formschlüssige Aufnahme an der Werkzeugspindel 20 ermöglicht ist.

Um eine automatische Erkennung des Werkzeugs 104 zu gewährleisten, ist ein RFID-Chip vorgesehen, der schematisch mit 106 angedeutet ist.

Der Oszillationsantrieb 10 weist eine lediglich mit 102 schematisch angedeutete Steuerelektronik auf, welche den RFID-Chip 106 automatisch ausliest und dann hierzu eine zugeordnete Amplitude des Oszillationswinkels automatisch einstellt. Der EC-Motor des Oszillationsantriebs 10 wird von der Steuereinrichtung 102 automatisch mit der zugeordneten Drehrichtung betrieben, mit der sich der gewünschte Oszillationswinkel ergibt.

Bei dem zweiten beispielhaft dargestellten Werkzeug 110 handelt es sich um ein Schleifwerkzeug mit einem relativ großen Schleifteller, das wiederum mit einem RFID-Chip 106 versehen ist. Infolge der relativ großen Trägheit des Schleifwerkzeuges sollte dieses üblicherweise mit einer geringeren Amplitude des Oszillationswinkels betrieben werden. Diese Einstellung auf die geringere Amplitude wird wiederum automatisch über die Steuereinrichtung 102 bewirkt.

Zusätzlich zu einer automatischen Einstellung der Amplitude des Oszillationswinkels können auch noch unterschiedliche Drehzahlen abgespeichert sein, so dass die betreffenden Werkzeuge mit einer optimalen Kombination von Oszillationswinkel und Drehzahl verwendet werden können.

## Patentansprüche

1. Oszillationsantrieb mit einem Antrieb (26) und mit einem Exzenterkoppeltrieb (28) zur Umsetzung einer Drehbewegung des Antriebs (26) in eine drehoszillierende Bewegung einer Werkzeugspindel (20) um ihre Längsachse (21), wobei der Exzenterkoppeltrieb (28) einen vom Antrieb (26) angetriebenen Exzenter (34) mit einer ersten Exzentrizität (e₁) aufweist, der mit einem Koppelelement (40) zusammenwirkt, das mit der Werkzeugspindel (20) gekoppelt ist, um die Bewegung des Exzenters (34) in eine drehoszillierende Bewegung der Werkzeugspindel (20) umzusetzen, wobei der Exzenter (34) mit einem Zusatzexzenter (36, 36a) mit einer zweiten Exzentrizität (e₂) gekoppelt ist, so dass sich die Exzentrizitäten (e₁, e₂) überlagern, wobei zur Veränderung der Amplitude der Oszillationsbewegung der Werkzeugspindel (20) die Relativlage zwischen dem Exzenter (34) und dem Zusatzexzenter (36, 36a) in mindestens zwei unterschiedliche Positionen verstellbar ist, **dadurch gekennzeichnet, dass** das Koppelelement als Schwinggabel (40) ausgebildet ist, welche an einem ersten Ende fest mit der Werkzeugspindel (20) verbunden ist und an einem zweiten Ende vom Zusatzexzenter (36, 36a) angetrieben ist.

2. Oszillationsantrieb nach Anspruch 1, **dadurch gekennzeichnet, dass** der Antrieb (26) in seiner Drehrichtung umschaltbar ausgebildet ist, um eine Umschaltung zwischen einer ersten Relativposition von Exzenter (34) und Zusatzexzenter (36, 36a), in welcher sich die beiden Exzentrizitäten (e1, e2) additiv überlagern, und einer zweiten Relativposition, in welcher sich die Exzentrizitäten (e1, e2) von Exzenter (34) und Zusatzexzenter (36, 36a) subtraktiv überlagern, zu bewirken.

3. Oszillationsantrieb nach Anspruch 2, **dadurch gekennzeichnet, dass** Exzenter (34) und Zusatzexzenter (36, 36a) zwischen der ersten und der zweiten Relativposition um 180° zueinander verdreht sind.

4. Oszillationsantrieb nach einem der Ansprüche 1 bis 3, **dadurch gekennzeichnet, dass** der Zusatzexzenter (36, 36a) auf dem Exzenter (34) drehbar aufgenommen ist, und dass das zweite Ende der Schwinggabel (40) ein Exzenterlager (38), das auf dem Zusatzexzenter (36, 36a) gehalten ist, von außen umschließt.

5. Oszillationsantrieb nach einem der Ansprüche 1 bis 4, **dadurch gekennzeichnet, dass** das Exzenterlager (38) als Drehlager mit einem balligen Außenring (39) ausgebildet ist, der von zwei Gabelenden (42, 43) der Schwinggabel (40) umschlossen ist.

6. Oszillationsantrieb nach einem der vorhergehenden Ansprüche, **dadurch gekennzeichnet, dass** der Exzenter (34) einen Exzenterstutzen (35) aufweist, der in eine exzen¬trisch angeordnete Ausnehmung (37) des Zusatzexzenters (36, 36a) eingreift, auf dessen Außenoberfläche das Exzenterlager (38) gehalten ist.

7. Oszillationsantrieb nach Anspruch 6, **dadurch gekennzeichnet, dass** der Exzenterstutzen (35) an einem Ende einer rotatorisch angetriebenen Abtriebswelle (27) des Antriebs (26) ausgebildet ist.

8. Oszillationsantrieb nach Anspruch 7, **dadurch gekennzeichnet, dass** der Antrieb (26) einen Elektromotor aufweist, an dessen Motorwelle (27) der Exzenterstutzen (35) ausgebildet ist.

9. Oszillationsantrieb nach Anspruch 8, **dadurch gekennzeichnet, dass** auf der Motorwelle (27) eine Hülse (48, 48a) drehfest angeordnet ist, die über einen Mitnehmer (52, 68) in mindestens zwei Relativpositionen mit dem Zusatzexzenter (36, 36a) koppelbar ist.

10. Oszillationsantrieb nach Anspruch 9, **dadurch gekennzeichnet, dass** der Zusatzexzenter (36a) eine Scheibe (44a) aufweist, die innerhalb der Hülse (48a) verdrehbar angeordnet ist und in den mindestens zwei Relativpositionen an einer Nase (68) der Hülse (48a) anschlägt.

11. Oszillationsantrieb nach Anspruch 10, **dadurch gekennzeichnet, dass** die Scheibe (44a) einen federnden Abschnitt (70) aufweist, der sich unter Fliehkraftwirkung nach außen aufweitet und an einer Innenoberfläche der Hülse (48a) zur Fixierung der Relativlage zwischen Exzenter (34) und Zusatzexzenter (36a) anliegt.

12. Oszillationsantrieb nach Anspruch 9 oder 11, **dadurch gekennzeichnet, dass** eine Bremseinrichtung (54) vorgesehen ist, welche eine Bremsung der Motorwelle (27) im Stillstand relativ zum Gehäuse (12) erlaubt und sich bei rotierender Motorwelle (27) unter Fliehkraftwirkung löst, um die Bremswirkung aufzuheben.

13. Oszillationsantrieb nach Anspruch 12, **dadurch gekennzeichnet, dass** die Hülse (48) eine Führungskulisse (50) in Form einer Ausnehmung aufweist, durch welche hindurch ein Mitnehmerstift (52) in eine zugeordnete Mitnehmeraufnahme (46) am Zusatzexzenter (36) eingreift, um die Relativposition zwischen Exzenter (34) und Zusatzexzenter (36) festzulegen.

14. Oszillationsantrieb nach Anspruch 13, **dadurch gekennzeichnet, dass** die Bremseinrichtung (54) zwei federnd beaufschlagte, radial beweglich Bremsbacken (55, 56) zur Bremsung des Zusatzexzenters (36) am Gehäuse (12) bei Drehrichtungsumkehr aufweist, welche sich unter Fliehraftwirkung nach außen gegen die Federwirkung aufweiten, um die Bremsung aufzuheben.

15. Oszillationsantrieb nach Anspruch 14, **dadurch gekennzeichnet, dass** am Gehäuse (12) eine Lagerbuchse gehalten (60) ist, auf der die Bremsbacken (55, 56) bei Drehrichtungsumkehr aufliegen, und dass sich die Bremsbacken (55, 56) unter Fliehkraftwirkung an einer Innenoberfläche der Hülse (48) anlegen, um so die Relativlage zwischen Exzenter (34) und Zusatzexzenter (36) zu fixieren.

16. Oszillationsantrieb nach Anspruch 14 oder 15, **dadurch gekennzeichnet, dass** die Bremsbacken (55, 56) über den Mitnehmerstift (52), der sich durch die Führungskulisse (50) der Hülse (48) hindurch in die Mitnehmeraufnahme (46) erstreckt, mit dem Zusatzexzenter (36) gekoppelt sind.

17. System mit einem Oszillationsantrieb (10) nach einem der vorhergehenden Ansprüche, und mit einer Mehrzahl von Werkzeugen (104, 110), wobei die Werkzeuge (104, 110) eine Codierung (106) aufweisen, und mit einer Steuerung (102) zur automatischen Einstellung des Oszillationswinkels.

## Claims

1. Oscillation drive with a drive (26) and with an eccentric coupling drive (28) for converting a rotational movement of the drive (26) into a rotational oscillating movement of a tool spindle (20) about its longitudinal axis (21), wherein the eccentric coupling drive (28) comprises an eccentric (34) with a first eccentricity (e₁) driven by the drive (26), which cooperates with a coupling element (40) coupled to the tool spindle (20) in order to convert the movement of the eccentric (34) into a rotationally oscillating movement of the tool spindle (20), wherein the eccentric (34) is coupled to an additional eccentric (36, 36a) with a second eccentricity (e₂), such that the eccentricities (e₁, e₂) are superimposed, wherein the relative position between the eccentric (34) and the additional eccentric (36, 36a) is adjustable into at least two different positions, **characterized in that** the coupling element is adapted as a tuning fork (40) which is fixedly connected to the tool spindle (20) at a first end and is driven by the additional eccentric (36, 36a) at a second end.

2. Oscillation drive according to claim 1, **characterized in that** the drive (26) is adapted to be switchable in its direction of rotation in order to effect a switchover between a first relative position of eccentric (34) and additional eccentric (36, 36a), in which the two eccentricities (e₁, e₂) are additively superimposed, and a second relative position in which the eccentricities (e₁, e₂) of eccentric (34) and additional eccentric (36, 36a) are subtractively superimposed.

3. Oscillation drive according to claim 2, **characterized in that** eccentric (34) and additional eccentric (36, 36a) are rotated by 180° with respect to each other between the first and the second relative position.

4. Oscillation drive according to one of claims 1 to 3, **characterized in that** the additional eccentric (36, 36a) is rotatably received on the eccentric (34), and **in that** the second end of the tuning fork (40) externally encloses an eccentric bearing (38) which is held on the additional eccentric (36, 36a).

5. Oscillation drive according to one of claims 1 to 4, **characterized in that** the eccentric bearing (38) is adapted as a rotary bearing with a crowned outer ring (39) which is enclosed by two fork ends (42, 43) of the tuning fork (40).

6. Oscillation drive according to one of the preceding claims, **characterized in that** the eccentric (34) comprises an eccentric connection piece (35) which engages in an eccentrically arranged recess (37) of the additional eccentric (36, 36a), on the outer surface of which the eccentric bearing (38) is held.

7. Oscillation drive according to claim 6, **characterized in that** the eccentric connection piece (35) is formed at one end of a rotationally driven output shaft (27) of the drive (26).

8. Oscillation drive according to claim 7, **characterized in that** the drive (26) comprises an electric motor, on the motor shaft (27) of which the eccentric connection piece (35) is formed.

9. Oscillation drive according to claim 8, **characterized in that** a sleeve (48, 48a) is arranged in a rotationally fixed manner on the motor shaft (27) and can be coupled to the additional eccentric (36, 36a) in at least two relative positions via a driver (52, 68).

10. Oscillation drive according to claim 9, **characterized in that** the additional eccentric (36a) comprises a disc (44a) which is arranged rotatably inside the sleeve (48a) and, in the at least two relative positions, strikes against a lug (68) of the sleeve (48a).

11. Oscillation drive according to claim 10, **characterized in that** the disc (44a) comprises a resilient section (70) which expands outwardly under the effect of centrifugal force and bears against an inner surface of the sleeve (48a) to fix the relative position between the eccentric (34) and the additional eccentric (36a).

12. Oscillation drive according to claim 9 or 11, **characterized in that** a braking device (54) is provided which permits braking of the motor shaft (27) at standstill relative to the housing (12) and is released under centrifugal force action when the motor shaft (27) is rotating in order to cancel the braking action.

13. Oscillation drive according to claim 12, **characterized in that** the sleeve (48) comprises a guide slot (50) in the form of a recess through which a driver pin (52) engages in an associated driver receptacle (46) on the additional eccentric (36) in order to fix the relative position between eccentric (34) and additional eccentric (36).

14. Oscillation drive according to claim 13, **characterized in that** the braking device (54) comprises two radially movable brake shoes (55, 56), which are acted upon resiliently, for braking the additional eccentric (36) on the housing (12) when the direction of rotation is reversed, which brake shoes (55, 56) expand outwards under centrifugal force action against the spring action in order to cancel the braking.

15. Oscillation drive according to claim 14, **characterized in that** a bearing bush is held (60) on the housing (12), on which bush the brake shoes (55, 56) rest when the direction of rotation is reversed, and **in that** the brake shoes (55, 56) bear against an inner surface of the sleeve (48) under the action of centrifugal force, in order thus to fix the relative position between eccentric (34) and additional eccentric (36).

16. Oscillation drive according to claim 14 or 15, **characterized in that** the brake shoes (55, 56) are coupled to the additional eccentric (36) via the driver pin (52), which extends through the guide slot (50) of the sleeve (48) into the driver receptacle (46).

17. System comprising an oscillation drive (10) according to any one of the preceding claims, and comprising a plurality of tools (104, 110), the tools (104, 110) comprising a coding (106), and a controller (102) for automatically adjusting the oscillation angle.

## Revendications

1. Entraînement oscillant doté d'un entraînement (26) et d'un entraînement d'accouplement excentrique (28) pour convertir un mouvement de rotation de l'entraînement (26) en un mouvement oscillatoire en rotation d'une broche porte-outil (20) autour de son axe longitudinal (21), dans lequel l'entraînement d'accouplement excentrique (28) présente un excentrique (34), entraîné par l'entraînement (26), avec une première excentricité (e₁) lequel excentrique interagit avec un élément de couplage (40) couplé à la broche porte-outil (20) pour convertir le mouvement de l'excentrique (34) en un mouvement oscillatoire en rotation de la broche porte-outil (20), l'excentrique (34) étant couplé à un excentrique supplémentaire (36, 36a) d'une deuxième excentricité (e₂), de sorte que les excentricités (e₁, e₂) se superposent, sachant que pour modifier l'amplitude du mouvement oscillatoire de la broche porte-outil (20), la position relative entre l'excentrique (34) et l'excentrique supplémentaire (36, 36a) est réglable dans au moins deux positions différentes, **caractérisé en ce que** l'élément de couplage est en forme de lame vibrante (40) solidaire de la broche porte-outil (20) sur une première extrémité et entraînée par l'excentrique supplémentaire (36, 36a) sur une deuxième extrémité.

2. Entraînement oscillant selon la revendication 1, **caractérisé en ce que** l'entraînement (26) est conçu pour pouvoir commuter dans son sens de rotation afin de provoquer une commutation entre une première position relative de l'excentrique (34) et de l'excentrique supplémentaire (36, 36a) dans laquelle les deux excentricités (e1, e2) se superposent de manière additive, et une deuxième position relative dans laquelle les excentricités (e1, e2) de l'excentrique (34) et de l'excentrique supplémentaire (36, 36a) se superposent de manière soustractive.

3. Entraînement oscillant selon la revendication 2, **caractérisé en ce que** l'excentrique (34) et l'excentrique supplémentaire (36, 36a) sont tournés de 180° l'un par rapport à l'autre entre la première et la deuxième position relative.

4. Entraînement oscillant selon l'une quelconque des revendications 1 à 3, **caractérisé en ce que** l'excentrique supplémentaire (36, 36a) peut être pivoté sur l'excentrique (34) et **en ce que** la deuxième extrémité de la lame vibrante (40) entoure de l'extérieur un palier excentrique (38) maintenu sur l'excentrique supplémentaire (36, 36a).

5. Entraînement oscillant selon l'une quelconque des revendications 1 à 4, **caractérisé en ce que** le palier excentrique (38) est conçu comme palier rotatif avec une bague extérieure bombée (39) laquelle est enfermée par deux extrémités (42, 43) de la lame vibrante (40).

6. Entraînement oscillant selon l'une quelconque des revendications précédentes, **caractérisé en ce que** l'excentrique (34) présente un manchon excentrique (35) qui s'engage dans un évidement excentré (37) de l'excentrique supplémentaire (36, 36a) sur la surface extérieure duquel le palier excentrique (38) est maintenu.

7. Entraînement oscillant selon la revendication 6, **caractérisé en ce que** le manchon excentrique (35) est agencé sur une extrémité d'un arbre de sortie à entraînement rotatif (27) de l'entraînement (26).

8. Entraînement oscillant selon la revendication 7, **caractérisé en ce que** l'entraînement (26) présente un moteur électrique sur l'arbre moteur (27) duquel le manchon excentrique (35) est agencé.

9. Entraînement par oscillation selon la revendication 8, **caractérisé en ce qu'**une douille (48, 48a) est disposée de manière fixe en rotation sur l'arbre moteur (27) pouvant être couplée avec l'excentrique supplémentaire (36, 36a) par l'intermédiaire d'un entraîneur (52, 68) dans au moins deux positions relatives.

10. Entraînement oscillant selon la revendication 9, **caractérisé en ce que** l'excentrique supplémentaire (36a) présente une rondelle (44a) disposée de façon pivotante à l'intérieur de la douille (48a) et bute dans les au moins deux positions relatives contre un ergot (68) de la douille (48a) .

11. Entraînement oscillant selon la revendication 10, **caractérisé en ce que** la rondelle (44a) présente une partie élastique (70) qui s'élargit vers l'extérieur sous l'effet de la force centrifuge et plaque contre une surface intérieure de la douille (48a) afin d'immobiliser la position relative entre l'excentrique (34) et l'excentrique supplémentaire (36a).

12. Entraînement oscillant selon la revendication 9 ou 11, **caractérisé en ce qu'**un dispositif de freinage (54) permettant un freinage de l'arbre moteur (27) à l'arrêt par rapport au carter (12) est prévu et se desserre sous l'effet de la force centrifuge lorsque l'arbre moteur (27) tourne pour supprimer l'effet de freinage.

13. Entraînement oscillant selon la revendication 12, **caractérisé en ce que** la douille (48) présente une coulisse de guidage (50) en forme d'évidement traversé par une tige d'entraînement (52) qui s'engage dans un logement d'entraîneur (46) dédié sur l'excentrique supplémentaire (36) afin de déterminer la position relative entre l'excentrique (34) et l'excentrique supplémentaire (36).

14. Entraînement oscillant selon la revendication 13, **caractérisé en ce que** le dispositif de freinage (54) présente deux segments de frein à ressort, mobiles radialement (55, 56) pour le freinage de l'excentrique supplémentaire (36) sur le carter (12) lors de l'inversion du sens de rotation, qui s'élargissent vers l'extérieur contre l'effet de ressort sous l'effet de la force centrifuge pour supprimer le freinage.

15. Entraînement oscillant selon la revendication 14, **caractérisé en ce qu'**un coussinet de palier (60) est maintenu sur le carter (12), coussinet sur lequel reposent les segments de frein (55, 56) lors de l'inversion du sens de rotation, et **en ce que** les segments de frein (55, 56), sous l'effet de la force centrifuge, viennent buter contre une surface intérieure de la douille (48) afin d'immobiliser ainsi la position relative entre l'excentrique (34) et l'excentrique supplémentaire (36).

16. Entraînement oscillant selon la revendication 14 ou 15, **caractérisé en ce que** les segments de frein (55, 56) sont couplés avec l'excentrique supplémentaire (36) à l'aide de la tige d'entraînement (52) traversant la coulisse de guidage (50) de la douille (48) jusque dans le logement de l'entraîneur (46).

17. Système doté d'un entraînement oscillant (10) selon l'une quelconque des revendications précédentes, et d'une pluralité d'outils (104, 110), les outils (104, 110) ayant un codage (106) et d'une commande (102) pour le réglage automatique de l'angle d'oscillation.
